(19) Europäisches Patentamt / European Patent Office / Office européen des brevets

(11) **EP 2 463 515 B1**

(12) **FASCICULE DE BREVET EUROPEEN**

(45) Date de publication et mention
de la délivrance du brevet:
**09.09.2015 Bulletin 2015/37**

(51) Int Cl.:
***F03D 1/06*** (2006.01)

(21) Numéro de dépôt: **11192218.3**

(22) Date de dépôt: **06.12.2011**

(54) **Pale d'éolienne avec surface équivalente radar réduit et éolienne munie d'une telle pale**

Flügel einer Windkraftanlage mit reduzierter Radarquerschnitt, und mit einem solchen Flügel ausgestattete Windkraftanlage

Wind-turbine blade with reduced radar signature and wind turbine provided with such a blade

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **08.12.2010 FR 1060253**

(43) Date de publication de la demande:
**13.06.2012 Bulletin 2012/24**

(73) Titulaire: **Ineo Defense**
**78140 Velizy Villacoublay (FR)**

(72) Inventeur: **COLLIGNON, Gérard**
**91400 ORSAY (FR)**

(74) Mandataire: **Deschamps, Samuel et al**
**Ipside**
**29, rue de Lisbonne**
**75008 Paris (FR)**

(56) Documents cités:
EP-A1- 2 153 964      WO-A1-2009/140949
WO-A2-2010/122352      FR-A1- 2 930 601
US-A1- 2007 251 090

• PINTO J ET AL: "Radar signature reduction of wind turbines through the application of stealth technology", ANTENNAS AND PROPAGATION, 2009. EUCAP 2009. 3RD EUROPEAN CONFERENCE ON, IEEE, PISCATAWAY, NJ, USA, 23 mars 2009 (2009-03-23), pages 3886-3890, XP031470611, ISBN: 978-1-4244-4753-4
• VARGA: 'radar signature control using metamaterials', [en ligne] 30 Novembre 2004, XP055076660 Extrait de l'Internet: <URL:http://www.dtic.mil/cgi-bin/GetTRDoc?AD=ADA436221> [extrait le 2013-08-27]

**Description**

**DOMAINE TECHNIQUE DE L'INVENTION**

La présente invention concerne une pale d'éolienne furtive améliorée ainsi qu'une éolienne munie d'une telle pale. L'invention a notamment pour but de limiter les perturbations électromagnétiques des radars au sol dues à la réflexion des ondes du radar par les pales d'éolienne.

L'invention trouve une application particulière avantageuse dans le domaine des pales d'éolienne en matériau composite, mais pourrait également être utilisée pour tout autre élément en matériau diélectrique susceptible de se trouver sur le chemin du signal radar.

**. ETAT DE LA TECHNIQUE**

De manière connue, une éolienne est constituée d'une tour, d'une nacelle contenant la génératrice électrique et d'un rotor constitué en général de 3 pales à 120°. La plupart des tours sont tubulaires et légèrement coniques, elles sont fabriquées en acier. La hauteur de la tour est en général voisine du diamètre du rotor. La longueur des pales est de 25m environ pour une éolienne de 750kW et de 35m pour des éoliennes de 2 à 5 MW. Pour le futur, des pales de longueur 80m et plus sont envisagées.

De nombreuses perturbations des radars au sol ont été constatées par Météo France, par l'Aviation Civile et par le Ministère de la Défense. Ces grands utilisateurs de Radars ont saisi la Commission de Compatibilité Electromagnétique de l'Agence Nationale des Fréquences (ANFR) de la question de ces perturbations en 2004.

Les radars météo du type bande S: 2.8 GHz et bande C: 5.6 GHz, les radars primaires du type Bande L:1.3 GHz ou bande S:3 GHz, ainsi que les radars secondaires (IFF à 1 GHz) sont concernés. De plus, pour les implantations d'éoliennes off shore, les radars de surveillance côtière (bande X: 10 GHz) sont également concernés. Les perturbations du fonctionnement radar ont pour origine les réflexions de l'impulsion radar par les parties fixes (tour et nacelle) ou mobiles (pales en rotation) de l'éolienne.

La réflexion du signal radar sur les parties fixes de l'éolienne est assimilable à un écho fixe au même titre que toutes les réflexions sur l'environnement ou le relief. Le traitement du radar est donc adapté en mettant en oeuvre des filtrages de type doppler MTI ou VCM, afin de filtrer ces échos indésirables. Cependant, la Surface Equivalente Radar (SER égale au produit de la surface projetée de l'objet et du gain qui est fonction de l'objet) de la tour et de la nacelle d'une éolienne peut être très élevée (supérieure à 1000 m$^2$ pour une seule éolienne) et provoquer un écho fixe d'un niveau très important allant jusqu'à la saturation du récepteur si la distance est faible (inférieure à 30 km).

Les conséquences de cette saturation peuvent alors être:

- la dégradation de plusieurs cases distance de la détection pour les distances voisines de celle de l'éolienne en cas de traitement TFAC par le radar (variation du seuil de détection radar avec le niveau de bruit aux distances voisines), et/ou
- la non linéarité de la compression d'impulsion faisant apparaître des échos parasites, et/ou
- des inter-modulations non linéaires conduisant à un étalement de spectre faisant apparaître des échos à doppler non nul.

Des solutions à ce problème consistent à réduire la SER des parties fixes. Les technologies sont connues dans le domaine de la furtivité aéronautique et navale. Ainsi, la furtivité peut être obtenue en jouant sur la forme du mat et de la nacelle par utilisation de surfaces planes orientées obliquement par rapport au radar. On utilise alors une tour de section polygonale (à la place d'une tour circulaire) et une nacelle à facettes. L'utilisation de revêtements absorbants est également envisageable.

Par ailleurs, la réflexion sur les pales en mouvement provoque un écho dont la fréquence Doppler est comparable à celle des cibles recherchées. La plage de vitesses concernée est très large puisqu'elle s'étale de 0 à la vitesse en bout de pale (60m/s) en positif et négatif. Le traitement radar classique ne peut donc pas supprimer cet écho.

Le brevet français ayant le numéro de dépôt 0852746 déposé le 28 mai 2010 décrit le principe de la réduction de la SER d'une pale d'éolienne fabriquée en composite monolithique d'épaisseur variable. Cette réduction de SER est obtenue en améliorant la transparence radioélectrique de la paroi de la pale au moyen de circuits d'adaptation à motifs métalliques quasi-périodiques. L'enseignement de ce document porte uniquement sur des pales dont la paroi est un diélectrique homogène (monolithique).

En réalité, certaines pales d'éolienne sont réalisées à partir d'une technologie hybride comportant des zones homogènes comme précédemment mais également des zones en matériau de type sandwich multicouches ayant pour but d'alléger la structure tout en conservant les performances mécaniques des matériaux composites. La paroi d'un matériau de type sandwich est constituée de deux peaux composites diélectriques séparées entre elles par une âme ayant une faible constante diélectrique.

On sait que les matériaux de type de sandwich sont utilisés dans la fabrication des parois des radômes. Toutefois, pour les radômes, le problème de l'adaptation de ces parois ne se pose pas dans la mesure où, au moment de la fabrication, les épaisseurs des différentes parois sont adaptées pour être transparentes aux ondes radar.

D'autre part, si l'homme du métier appliquait l'enseignement du brevet numéro 0852746, il adapterait chaque paroi du matériau de type sandwich. En effet, de la même manière que pour une paroi homogène, chaque peau constituant le sandwich serait adaptée en utilisant des réseaux de motifs métalliques quasi-périodiques.

En fonction de l'épaisseur des peaux et de la longueur d'onde choisie, les différentes techniques décrites dans le brevet 0852746 peuvent être utilisées. Ainsi pour les peaux minces, on utiliserait un circuit à mi-épaisseur de chaque peau. Tandis que pour les peaux épaisses on utiliserait un circuit sur chaque face de chaque peau. Le nombre de couches de réseaux métalliques est donc compris entre 2 et 4 en fonction des épaisseurs des peaux constituant le sandwich, ce qui multiplie le nombre de circuits d'adaptation et donc le coût de l'opération d'adaptation de la pale.

Il existe donc le besoin d'une technique permettant une adaptation électromagnétique efficace et à moindre coût des pales d'éolienne réalisées au moins en partie dans un matériau composite de type sandwich.

On connaît dans l'état de la technique la demande PCT N° WO 2010/122352, qui décrit un dispositif à deux couches de mousse, et à deux couches fonctionnelles. Une couche est réalisée en un matériau absorbant radar (RAM) ; tandis qu'une couche fonctionnelle constitue un plan réflecteur réalisé avec un tissu en carbone. Ces deux couches constituent ainsi un absorbant de type écran de Salisbury connu depuis très longtemps.

## . OBJET DE L'INVENTION

L'invention comble ce besoin en proposant une pale d'éolienne ayant une coque creuse présentant au moins localement une paroi de type sandwich, cette paroi étant constituée d'au moins deux peaux composites diélectriques séparées par une âme réalisée en matériau de faible constante diélectrique, caractérisée en ce qu'elle comporte au moins un circuit d'adaptation à comportement inductif ou capacitif positionné à l'intérieur de l'âme permettant de réduire la surface équivalente radar de la pale en rendant ladite pale transparente dans la bande de fréquences d'un radar à la proximité duquel ladite pale est destinée à être installée.

Selon une réalisation, le circuit d'adaptation fait varier la distance électrique entre les deux peaux pour adapter globalement la paroi de type sandwich.

Selon une réalisation, le circuit d'adaptation présente une susceptance telle que dans le diagramme de Smith, le chemin correspondant à la traversée de l'onde du radar à l'intérieur de la pale reboucle au point central de conductance 1 et de susceptance 0.

Selon une réalisation, le circuit d'adaptation est situé à mi-épaisseur de l'âme pour deux peaux identiques ayant une même épaisseur.

Selon une réalisation, la susceptance du circuit d'adaptation permettent d'adapter globalement la paroi de type sandwich est donnée par :

$$B_0 = -2B_2 = -2B\frac{2\cos\theta - B\sin\theta}{2 + B^2 - B^2\cos\theta - 2B\sin\theta}$$

- B étant la susceptance équivalente de chaque peau,
- $\theta$ valant $2\pi d/\lambda$, d étant l'épaisseur de l'âme, $\lambda$ étant la longueur d'onde de l'onde radar à l'intérieur de chaque peau.

Selon une réalisation, le circuit d'adaptation est excentré par rapport au milieu de l'âme pour des peaux d'épaisseurs différentes.

Selon une réalisation, la pale comporte une charpente interne servant de raidisseur, cette charpente étant recouverte d'un absorbant.

Selon une réalisation, le circuit d'adaptation est formé par un ou plusieurs circuits imprimés souples de faible épaisseur sur lesquels sont gravées des pistes métalliques formant un motif périodique.

Selon une réalisation, les circuits imprimés sont des circuits en verre époxy d'épaisseur 0.1 mm, les pistes métalliques étant en en cuivre et ayant une épaisseur de 35 $\mu$m.

Selon une réalisation, les peaux composites sont réalisées dans un matériau composite de type verre-résine en polyester ou époxy.

L'invention concerne en outre une éolienne comportant une pale selon l'invention.

**BREVE DESCRIPTION DES FIGURES**

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une vue en coupe d'une pale d'éolienne adaptée selon l'invention ;

Figure 2 : une vue en coupe de la zone de la pale de la Figure 1 formée d'une paroi de type sandwich ;

Figure 3 : une représentation schématique d'un circuit électrique équivalent à une paroi de type sandwich ;

Figure 4 : une représentation d'un chemin correspondant à la traversée de la paroi en matériau sandwich de la pale adaptée selon l'invention par l'onde radar dans un abaque de Smith, pour une paroi sandwich ayant deux peaux de même épaisseur ;

Figure 5 : une représentation d'un chemin correspondant à la traversée de la paroi en matériau sandwich de la pale adaptée selon l'invention par l'onde radar dans un abaque de Smith, pour une paroi sandwich ayant deux peaux d'épaisseurs différentes ;

Figures 6a-6b : des représentations graphiques des coefficients de réflexion d'une pale non adaptée et d'une pale selon l'invention pour un radar en bande S en fonction des fréquences du signal radar, pour deux parois ayant des configurations différentes ;

Figures 7 : des représentations schématiques d'exemples de motifs des circuits d'adaptation utilisés pour adapter la pale selon l'invention ;

Figure 8 : une représentation schématique d'un circuit imprimé selon l'invention muni de trous afin de favoriser la cohésion mécanique avec la pale ;

Les éléments identiques conservent la même référence d'une figure à l'autre.

. DESCRIPTION D'EXEMPLES DE REALISATION DE L'INVENTION

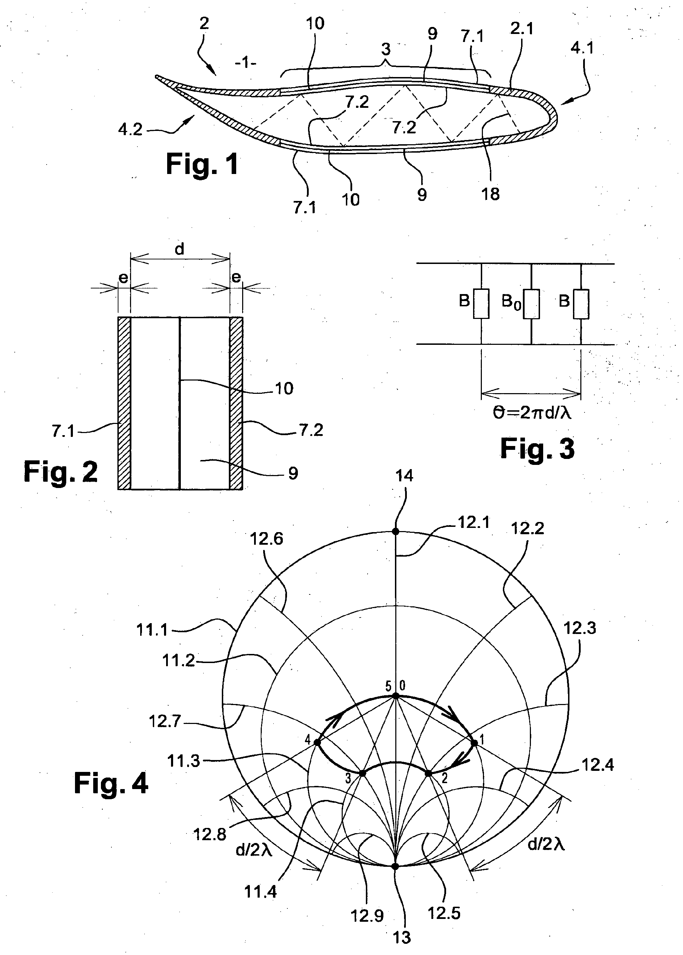

La Figure 1 montre une vue en coupe d'une pale 1 d'éolienne selon l'invention comportant une coque 2 creuse présentant une paroi 2.1. Aux extrémités de la pale 1, cette coque 2 est réalisée en matériau composite monolithe pour former un bord 4.1 d'attaque et un bord 4.2 de fuite de la pale 1. Le matériau monolithe peut par exemple être un composite de type verre-résine ayant une constante diélectrique voisine de 4.

La coque 2 présente une zone 3 intermédiaire reliant le bord 4.1 d'attaque et le bord 4.2 de fuite. Dans cette zone 3, la paroi 2.1 est constituée d'au moins deux peaux 7.1, 7.2 composites diélectriques par exemple séparées entre elles par une âme 9 ayant une faible constante diélectrique. Dans un exemple, les deux peaux 7.1, 7.2 sont réalisées dans un composite diélectrique de type verre-résine ; tandis que l'âme 9 est réalisée dans un matériau diélectrique de type mousse ou nid d'abeille ayant une constante diélectrique de l'ordre de 1.1.

Les épaisseurs des différentes couches de la paroi 2.1 peuvent varier dans la section et le long de la pale 1. Les zones sandwich peuvent être constituées de plusieurs peaux 7.1, 7.2 d'épaisseurs différentes. Ces épaisseurs sont définies pour obtenir les propriétés mécaniques souhaitées, les propriétés de transparence radioélectrique étant quelconques.

En conséquence, pour réduire la surface équivalente radar (SER) de la pale 1 dans la bande de fréquences d'un radar à la proximité duquel elle est destinée à être installée, au moins un circuit 10 d'adaptation à comportement inductif ou capacitif est positionné à l'intérieur de l'âme 9.

Pour un matériau de type sandwich constitué de deux peaux 7.1, 7.2 de même épaisseur, le circuit 10 d'adaptation est situé à mi-épaisseur de l'âme 9 (cf. Figure 2).

Selon une réalisation, un matériau de type sandwich est constitué de deux peaux ayant une constante diélectrique $\varepsilon=4$ d'épaisseur constante e séparées par une âme 9 en mousse de constante diélectrique voisine de 1 et d'épaisseur d. Chaque peau 7.1, 7.2 présentant une susceptance B, le montage électrique correspondant montré sur la Figure 3 présente deux susceptances B montées en parallèle avec la susceptance BO du circuit 10.

On considère en outre la longueur d'onde À de l'onde radar à l'intérieur de chaque peau 7.1, 7.2. Si l'épaisseur e est faible, la susceptance B équivalente à chaque peau 7.1, 7.2 est donnée par l'expression suivante :

$$B = \sqrt{\varepsilon}\,\mathrm{tg}\,\frac{2\pi e\sqrt{\varepsilon}}{\lambda}$$

La Figure 4 représente l'abaque de Smith en admittance correspondant à la traversée de la paroi 2 réalisé en matériau sandwich dans la zone 3 par l'onde radar.

On rappelle que les cercles 11.1-11.4 de cet abaque correspondent à une conductance (partie réelle de l'admittance) constante. L'axe vertical 12.1 et les portions de cercles 12.2-12.9 positionnées de part et d'autre de l'axe vertical 12.1 correspondent à une susceptance (partie imaginaire de l'admittance) constante. Un déplacement vers la droite dans le diagramme correspond à un effet capacitif du circuit tandis qu'un déplacement vers la gauche correspond à un effet inductif du circuit. Le point 13 situé en bas de l'abaque en admittance correspond à un court-circuit, tandis que le point 14 situé en haut correspond à un circuit ouvert. Le point central 0 de conductance 1 et de susceptance 0, qui est le point de départ du tracé du diagramme, correspond à un circuit adapté.

Lors de la traversée de la paroi sandwich par l'onde radar, on ajoute la susceptance B de la première peau 7.1 pour passer au point 1.

. On tourne ensuite vers le générateur (sens inverse trigonométrique) d'un angle correspondant à la demi-épaisseur de l'âme 9 en mousse soit d/2À pour passer au point 2.

On ajoute la susceptance B0 du circuit 10 d'adaptation pour passer au point 3, symétrique du point 2 par rapport à l'axe vertical 12.

On a donc B3= -B2 = B2+BO ; et B0= -2B2

B2 et B3 correspondant respectivement aux susceptances associées aux points 2 et 3 du diagramme de Smith.

On tourne vers le générateur d'un angle d/2À correspondant à la deuxième demi-épaisseur de l'âme 9 en mousse pour passer au point 4.

On ajoute la susceptance B de la deuxième peau 7.2 pour passer au point 5 et reboucler ainsi au point 0, de sorte que l'adaptation est obtenue.

La susceptance B0 du circuit 10 d'adaptation qui permet d'adapter globalement la paroi de type sandwich est donnée par :

$$B_0 = -2B_2 = -2B \frac{2\cos\theta - B\sin\theta}{2 + B^2 - B^2\cos\theta - 2B\sin\theta}$$

Avec $\theta = 2\pi d/\lambda$

Ce principe d'adaptation n'est pas limité à des peaux 7.1, 7.2 de mince épaisseur. Pour des peaux 7.1, 7.2 épaisses, seule l'expression mathématique de la susceptance B0 diffère mais le principe est inchangé.

Pour une épaisseur de mousse inférieure à environ un quart de longueur d'onde (cas de la Figure 4 précédente), la susceptance B0 est négative donc inductive. En revanche, pour une épaisseur de mousse supérieure à environ un quart de longueur d'onde, la susceptance B0 devient positive donc capacitive.

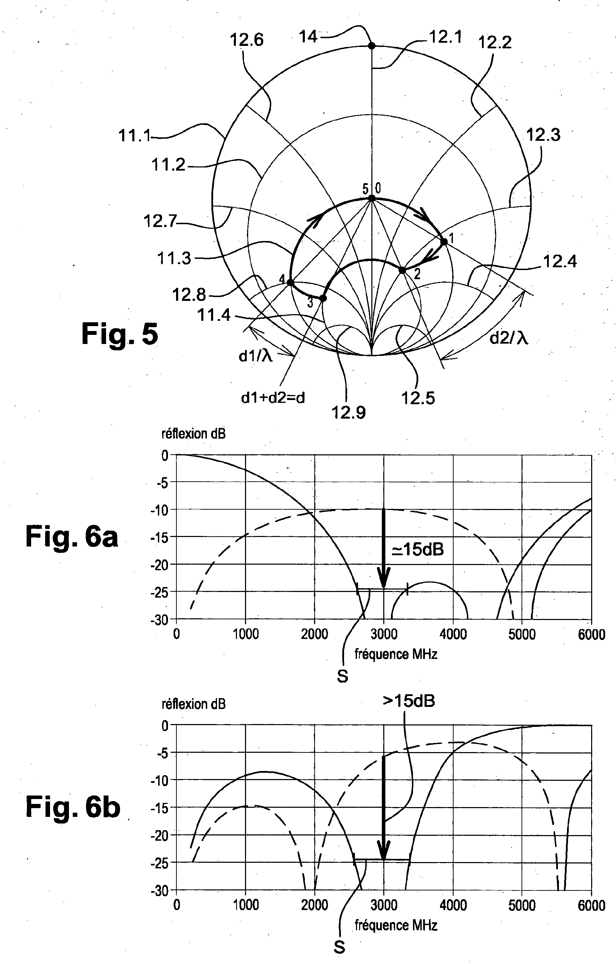

A titre d'exemple, les Figures 6a et 6b donnent le résultat obtenu pour une adaptation en bande S (3 GHz) de deux types de sandwichs ayant des peaux 7.1, 7.2 de même épaisseur. La courbe en traits pointillés indique le coefficient de réflexion de la paroi en matériau sandwich de départ et la courbe en trait plein indique le coefficient de réflexion de la paroi en matériau sandwich selon l'invention adaptée par un circuit 10 d'adaptation.

La Figure 6a a été obtenue pour un matériau de type sandwich à deux peaux 7.1, 7.2 d'épaisseur 3 mm séparées d'une âme 9 en mousse d'épaisseur 8mm. Dans ce cas, le circuit 10 d'adaptation est de type inductif.

La Figure 6b a été obtenue pour un matériau de type sandwich à deux peaux 7.1, 7.2 d'épaisseur 4 mm séparées d'une âme 9 en mousse d'épaisseur 30mm. Dans ce cas, le circuit d'adaptation est de type capacitif.

Dans les deux cas, la réduction du coefficient de réflexion est supérieure à 15 dB au voisinage de 3 GHz.

Dans le cas d'une paroi de type sandwich ayant des peaux d'épaisseurs différente, le circuit 10 d'adaptation est excentré par rapport au milieu de l'âme 9. Toutefois, comme montré sur la Figure 5, le principe d'adaptation de la pale 1 est le même que précédemment dans la mesure ou la susceptance du circuit 10 est choisie, de sorte que le chemin correspondant à la traversée de l'onde du radar à l'intérieur de la pale 1 reboucle au point central 0 de conductance 1 et de susceptance 0.

Pour certaines pales 1 de grandes dimensions ayant par exemple une longueur de plusieurs dizaines de mètres, la structure de la pâle 1 peut être renforcée au moyen d'une charpente 18 interne (cf. Figure 1) servant de raidisseur. Cette charpente 18 peut être réalisée en matériau diélectrique ou en composite carbone résine. Dans ce cas, il n'est pas possible d'améliorer la transparence de la charpente 18. La réduction de sa surface équivalente radar peut être obtenue par l'utilisation d'absorbants ou par le choix d'une forme adaptée. Ces techniques sont parfaitement compatibles et complémentaires de l'utilisation de circuits 10 d'adaptation.

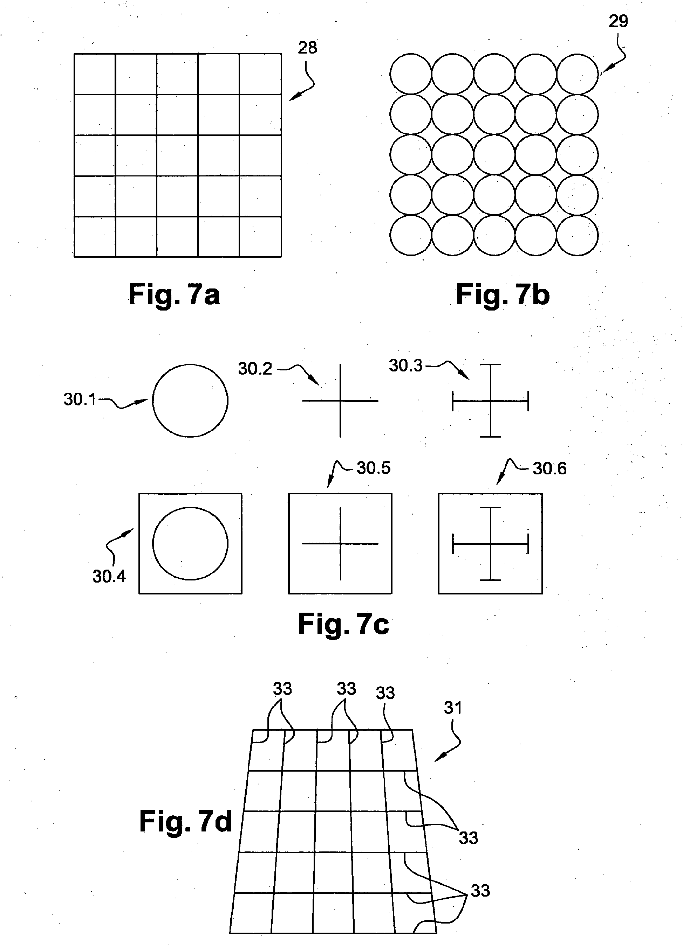

Le circuit d'adaptation 10 prend de préférence la forme d'un circuit métallique à mailles périodiques, comme représenté sur les Figures 7. La valeur de sa susceptance B0 est ajustée en choisissant le pas du motif périodique et la largeur des pistes. Dans la pratique, cet ajustement est effectué par simulation informatique.

De préférence, le circuit 10 d'adaptation est formé par des circuits imprimés en réseau souples, réalisés par exemple en verre époxy, de faible épaisseur, par exemple d'épaisseur de l'ordre de 0.1 mm, sur lesquels sont gravées des pistes métalliques, par exemple en cuivre d'épaisseur 35 μm, formant un motif 28, 29 périodique composé de motifs élémentaires tangents les uns aux autres.

Les motifs élémentaires peuvent par exemple être carrés comme montré sur la Figure 7a a, ou circulaires comme montré sur la figure 7b. Ce type de motifs permet au circuit 10 d'adaptation d'avoir un effet inductif indépendamment de la polarisation du signal du radar. En variante, les motifs élémentaires peuvent également être triangulaires ou hexagonaux.

En variante, comme montré sur la figure 7c, on utilise des motifs élémentaires indépendants isolés dans l'espace. Ainsi, on peut utiliser des motifs élémentaires en forme de rond (motif 30.1), de croix (motif 30.2) ou de croix de Jérusalem ayant des segments à ses extrémités (motif 30.3). Les motifs 30.1-30.3 peuvent être inscrits à l'intérieur d'un carré de manière à obtenir les motifs 30.4-30.6.

Les motifs élémentaires 30.1-30.6 peuvent être utilisés pour obtenir des degrés de liberté supplémentaires afin de réaliser l'adaptation dans plusieurs bandes de fréquences simultanément.

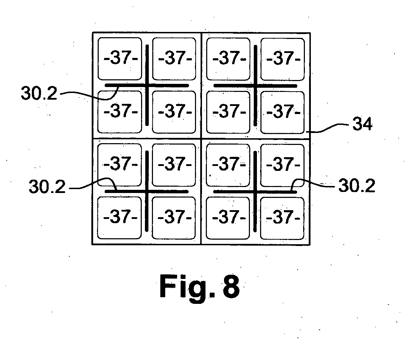

Le support du circuit imprimé peut être avantageusement percé de trous de surface maximale sans couper les pistes métalliques, afin de favoriser la cohésion mécanique du matériau composite de part et d'autre du circuit. Ainsi comme représenté sur la figure 8, un circuit imprimé 34 portant des pistes imprimées 30.2 en forme de croix présente des trous 37 percés autour de chaque croix 30.2.

Les circuits 10 d'adaptation peuvent par exemple être formés de circuits carrés de 500 mm par 500 mm de côté environ associés bord à bord avec une superposition d'au moins un fil pour assurer la continuité radioélectrique du réseau sur toute la surface.

Toutefois, les pales d'éolienne 1 ont en général une forme relativement complexe qui impose de disposer plusieurs circuits 10 d'adaptation sur des surfaces courbes non développables.

Cette difficulté peut être contournée en utilisant des circuits 10 d'adaptation présentant un motif 31 trapézoïdal du type de celui représenté sur la figure 7d. Le pas du motif 31 est variable mais la susceptance du circuit peut cependant rester constante sur toute sa surface en jouant sur la largeur des pistes 33.

Dans un exemple, les circuits des Figures 7 pourront être réalisés à l'aide d'une encre conductrice déposée par sérigraphie ou jet d'encre, ou tout autre type de dépôt approprié.

La taille des circuits est adaptée aux rayons de courbure de la surface de la pale 1 de telle sorte que leur association soit réalisable avec un minimum d'erreur. Cette solution est décrite dans le document FR-87 00724.

. La distance minimale d'implantation des éoliennes est souvent fixée à 30km du radar. Une éolienne équipée de pales 1 selon l'invention pourrait donc être implantée à une distance de 12 km pour le même niveau de perturbation du radar. En effet, la puissance reçue par un radar est proportionnelle à la SER et inversement proportionnelle à la distance à la puissance 4.

## Revendications

**1.** Pale (1) d'éolienne ayant une coque (2) creuse présentant au moins localement une paroi (2.1) de type sandwich, cette paroi (2.1) étant constituée d'au moins deux peaux (7.1, 7.2) composites diélectriques séparées par une âme (9) réalisée en matériau de faible constante diélectrique, **caractérisée en ce qu'**elle comporte :

- au moins un circuit (10) d'adaptation à comportement inductif ou capacitif positionné à l'intérieur de l'âme (9) permettant de réduire la surface équivalente radar de la pale (1) en rendant ladite pale (1) transparente dans la bande de fréquences d'un radar à la proximité duquel ladite pale (1) est destinée à être installée.

**2.** Pale d'éolienne selon la revendication 1, **caractérisée en ce que** le circuit (10) d'adaptation fait varier la distance électrique entre les deux peaux (7.1, 7.2) pour adapter globalement la paroi (2.1) de type sandwich.

**3.** Pale d'éolienne selon la revendication 1 ou 2, **caractérisée en ce que** le circuit (10) d'adaptation présente une susceptance (B0) telle que dans le diagramme de Smith, le chemin correspondant à la traversée de l'onde du radar à l'intérieur de la pale (1) reboucle au point central (0) de conductance 1 et de susceptance 0.

**4.** Pale d'éolienne selon l'une des revendications 1 à 3, **caractérisée en ce que** le circuit (10) d'adaptation est situé à mi-épaisseur de l'âme (9) pour deux peaux (7.1, 7.2) identiques ayant une même épaisseur (e).

**5.** Pale d'éolienne selon la revendication 4, **caractérisée en ce que** la susceptance (B0) du circuit (10) d'adaptation permettant d'adapter globalement la paroi de type sandwich est donnée par :

$$B_0 = -2B_2 = -2B \frac{2\cos\theta - B\sin\theta}{2 + B^2 - B^2\cos\theta - 2B\sin\theta}$$

- B étant la susceptance équivalente de chaque peau (7.1, 7.2),

- θ valant 2πd/λ, d étant l'épaisseur de l'âme, λ étant la longueur d'onde de l'onde radar à l'intérieur de chaque peau (7.1, 7.2).

6. Pale d'éolienne selon l'une des revendications 1 à 3, **caractérisée en ce que** le circuit (10) d'adaptation est excentré par rapport au milieu de l'âme (9) pour des peaux (7.1, 7.2) d'épaisseurs différentes.

7. Pale d'éolienne selon l'une des revendications 1 à 6, **caractérisée en ce qu'**elle comporte une charpente (18) interne servant de raidisseur, cette charpente (18) étant recouverte d'un absorbant.

8. Pale d'éolienne selon l'une des revendications 1 à 7, **caractérisée en ce que** le circuit (10) d'adaptation est formé par un ou plusieurs circuits imprimés souples de faible épaisseur sur lesquels sont gravées des pistes métalliques formant un motif périodique.

9. Pale d'éolienne selon la revendication 8, **caractérisée en ce que** les circuits imprimés sont des circuits en verre époxy d'épaisseur 0.1 mm, les pistes métalliques étant en en cuivre et ayant une épaisseur de 35 $\mu$m.

10. Pale d'éolienne selon l'une des revendications 1 à 11, **caractérisée en ce que** les peaux (7.1, 7.2) composites sont réalisées dans un matériau composite de type verre-résine en polyester ou époxy.

11. Eolienne comportant une pale (1) définie selon l'une des revendications 1 à 10.


**Patentansprüche**

1. Flügel (1) einer Windkraftanlage mit einer hohlen Schale (2), die mindestens lokal eine sandwichartige Wand (2.1) aufweist, wobei diese Wand (2.1) aus mindestens zwei dielektrischen Verbundlagen (7.1, 7.2) besteht, die durch einen Kern (9) getrennt sind, der aus einem Material mit geringer dielektrischer Konstante hergestellt ist, **dadurch gekennzeichnet, dass** er umfasst:

   - mindestens eine Anpassungsschaltung (10) mit induktivem oder kapazitivem Verhalten, die im Inneren des Kerns (9) positioniert ist und es ermöglicht, die äquivalente Radarfläche des Flügels (1) zu reduzieren, wobei der Flügel (1) in dem Frequenzband eines Radars, in dessen Nähe der Flügel (1) dazu bestimmt ist, installiert zu werden, transparent gemacht wird.

2. Flügel einer Windkraftanlage nach Anspruch 1, **dadurch gekennzeichnet, dass** die Anpassungsschaltung (10) die elektrische Distanz zwischen den beiden Lagen (7.1, 7.2) variiert, um die sandwichartige Wand (2.1) global anzupassen.

3. Flügel einer Windkraftanlage nach Anspruch 1 oder 2, **dadurch gekennzeichnet, dass** die Anpassungsschaltung (10) eine derartige Suszeptanz (B0) aufweist, dass im Smith-Diagramm der Weg, der dem Durchgang der Welle des Radars im Inneren des Flügels (1) entspricht, an den zentralen Punkt (0) der Konduktanz 1 und der Suszeptanz 0 zurückgeführt wird.

4. Flügel einer Windkraftanlage nach einem der Ansprüche 1 bis 3, **dadurch gekennzeichnet, dass** sich die Anpassungsschaltung (10) auf halber Dicke des Kerns (9) für zwei identische Lagen (7.1, 7.2) mit einer selben Dicke (e) befindet.

5. Flügel einer Windkraftanlage nach Anspruch 4, **dadurch gekennzeichnet, dass** die Suszeptanz (B0) der Anpassungsschaltung (10), die es ermöglicht, die sandwichartige Wand global anzupassen, gegeben ist durch:

$$B_0 = -2B_2 = -2B\frac{2\cos\theta - B\sin\theta}{2 + B^2 - B^2\cos\theta - 2B\sin\theta}$$

wobei B die äquivalente Suszeptanz jeder Lage (7.1, 7.2) ist,
θ gleich 2πd/λ ist, wobei d die Dicke des Kerns, λ die Wellenlänge der Radarwelle innerhalb jeder Lage (7.1, 7.2) ist.

**6.** Flügel einer Windkraftanlage nach einem der Ansprüche 1 bis 3, **dadurch gekennzeichnet, dass** die Anpassungsschaltung (10) in Bezug zur Mitte des Kerns (9) für Lagen (7.1, 7.2) mit unterschiedlichen Dicken exzentrisch angeordnet ist.

**7.** Flügel einer Windkraftanlage nach einem der Ansprüche 1 bis 6, **dadurch gekennzeichnet, dass** er ein inneres Gerüst (18), das als Versteifung dient, umfasst, wobei dieses Gerüst (18) mit einem Absorbens überzogen ist.

**8.** Flügel einer Windkraftanlage nach einem der Ansprüche 1 bis 7, **dadurch gekennzeichnet, dass** die Anpassungsschaltung (10) von einer oder mehreren flexiblen gedruckten Schaltungen von geringer Dicke gebildet ist, in die metallische Spuren, die ein periodisches Motiv bilden, graviert sind.

**9.** Flügel einer Windkraftanlage nach Anspruch 8, **dadurch gekennzeichnet, dass** die gedruckten Schaltungen Schaltungen aus Epoxy-Glas mit einer Dicke von 0,1 mm sind, wobei die metallischen Spuren aus Kupfer sind und eine Dicke von 35 μm aufweisen.

**10.** Flügel einer Windkraftanlage nach einem der Ansprüche 1 bis 11, **dadurch gekennzeichnet, dass** die Verbundlagen (7.1, 7.2) aus einem Verbundmaterial des Typs Glas-Harz aus Polyester oder Epoxy hergestellt sind.

**11.** Windkraftanlage, umfassend einen Flügel (1) nach einem der Ansprüche 1 bis 10.

**Claims**

**1.** Wind turbine blade (1) having a hollow shell (2) that at least locally has a wall (2.1) of sandwich type, this wall (2.1) consisting of at least two dielectric composite skins (7.1, 7.2) separated by a core (9) made of a material of low dielectric constant, **characterized in that** it comprises:

- at least one matching circuit (10) with inductive or capacitive behaviour positioned inside the core (9) making it possible to reduce the radar cross-section of the blade (1) by rendering said blade (1) transparent in the frequency band of a radar in proximity to which said blade (1) is intended to be installed.

**2.** Wind turbine blade according to Claim 1, **characterized in that** the matching circuit (10) varies the electrical distance between the two skins (7.1, 7.2) to globally adapt the wall (2.1) of sandwich type.

**3.** Wind turbine blade according to Claim 1 or 2, **characterized in that** the matching circuit (10) exhibits a susceptance (B0) such that, in the Smith diagram, the path corresponding to the passage of the wave from the radar inside the blade (1) loops back to the central point (0) of conductance 1 and of susceptance 0.

**4.** Wind turbine blade according to one of Claims 1 to 3, **characterized in that** the matching circuit (10) is situated at mid-thickness of the core (9) for two identical skins (7.1, 7.2) having a same thickness (e).

**5.** Wind turbine blade according to Claim 4, **characterized in that** the susceptance (B0) of the matching circuit (10) making it possible to globally adapt the wall of sandwich type is given by:

$$B_0 = -2B_2 = -2B\frac{2\cos\theta - B\sin\theta}{2 + B^2 - B^2\cos\theta - 2B\sin\theta}$$

- B being the equivalent susceptance of each skin (7.1, 7.2),
- θ having the value 2πd/λ, d being the thickness of the core, λ being the wavelength of the radar wave inside each skin (7.1, 7.2).

**6.** Wind turbine blade according to one of Claims 1 to 3, **characterized in that** the matching circuit (10) is eccentric

EP 2 463 515 B1

relative to the middle of the core (9) for skins (7.1, 7.2) of different thicknesses.

7.  Wind turbine blade according to one of Claims 1 to 6, **characterized in that** it comprises an internal framework (18) serving as stiffener, this framework (18) being covered by an absorbent.

8.  Wind turbine blade according to one of Claims 1 to 7, **characterized in that** the matching circuit (10) is formed by one or more flexible printed circuits of small thickness on which are etched metal tracks forming a periodic pattern.

9.  Wind turbine blade according to Claim 8, **characterized in that** the printed circuits are epoxy glass circuits 0.1 mm thick, the metal tracks being made of copper and having a thickness of 35 $\mu$m.

10. Wind turbine blade according to one of Claims 1 to 11, **characterized in that** the composite skins (7.1, 7.2) are produced in a composite material of fibreglass resin of polyester or epoxy type.

11. Wind turbine comprising a blade (1) defined according to one of Claims 1 to 10.

**Fig. 1**

**Fig. 2**

**Fig. 3**

$$\Theta = 2\pi d/\lambda$$

**Fig. 4**

$$d/2\lambda$$

**Fig. 5**

d1/λ  d2/λ

d1+d2=d

**Fig. 6a**

réflexion dB

≃15dB

fréquence MHz

S

**Fig. 6b**

réflexion dB

>15dB

fréquence MHz

S

28

**Fig. 7a**

29

**Fig. 7b**

30.1 30.2 30.3

30.5 30.6

30.4

**Fig. 7c**

33 33 33 31

**Fig. 7d**

33

33

**Fig. 8**

**EP 2 463 515 B1**

## RÉFÉRENCES CITÉES DANS LA DESCRIPTION

**Documents brevets cités dans la description**

- FR 0852746
- WO 2010122352 A
- FR 8700724